# FASCICULE DE BREVET EUROPEEN

(11) **EP 3 630 552 B1**
(45) Date de publication et mention de la délivrance du brevet: **04.08.2021**
(21) Numéro de dépôt: 18727043.4
(22) Date de dépôt: 25.04.2018
(51) Int. Cl.: B60R 19/18, B60R 19/24

(54) **PARTIE AVANT DE LA CAISSE D'UN VEHICULE A RENFORTS LATERAUX EN CAS DE CHOC FRONTAL CONTRE UN AUTRE VEHICULE**
FRONTTEIL DER KAROSSERIE EINES FAHRZEUGS MIT SEITENVERSTÄRKUNGEN FÜR DEN FALL EINES FRONTALZUSAMMENSTOSSES MIT EINEM ANDEREN FAHRZEUG
FRONT PART OF A VEHICLE BODY WITH LATERAL REINFORCEMENTS IN THE EVENT OF A FRONTAL IMPACT AGAINST ANOTHER VEHICLE

(30) Priorité: 29.05.2017 FR 1754670
(43) Date de publication de la demande: 08.04.2020
(73) Titulaire: PSA Automobiles SA, 78300 Poissy (FR)
(72) Inventeur: PERU, Marc, 92290 Chatenay Malabry (FR)
(86) Numéro de dépôt international: PCT/FR2018/051053
(87) Numéro de publication internationale: WO 2018/220306

(56) Documents cités:
- WO-A1-2015/014455
- DE-U1-202017 101 524
- FR-A1- 2 970 689
- JP-A- 2004 306 871
- US-A1- 2015 015 005
- US-B1- 9 457 746

## Description

La présente invention concerne une partie avant de la caisse d'un véhicule automobile.

Les constructeurs d'automobiles ont pour préoccupation de réduire les coûts de réparation des véhicules en cas de choc dit "urbain", c'est-à-dire à faible vitesse.

Le comportement des véhicules automobiles dans cette situation de choc est réglementé et testé à travers un nouveau protocole européen de choc frontal dénommé "choc frontal compatibilité".

Une partie avant connue de la caisse d'un véhicule automobile comprend une poutre avant transversale métallique dont les deux extrémités opposées sont reliées chacune à l'extrémité avant d'un absorbeur de choc dont l'extrémité arrière est reliée à l'avant de l'un des deux brancards de la caisse du véhicule.

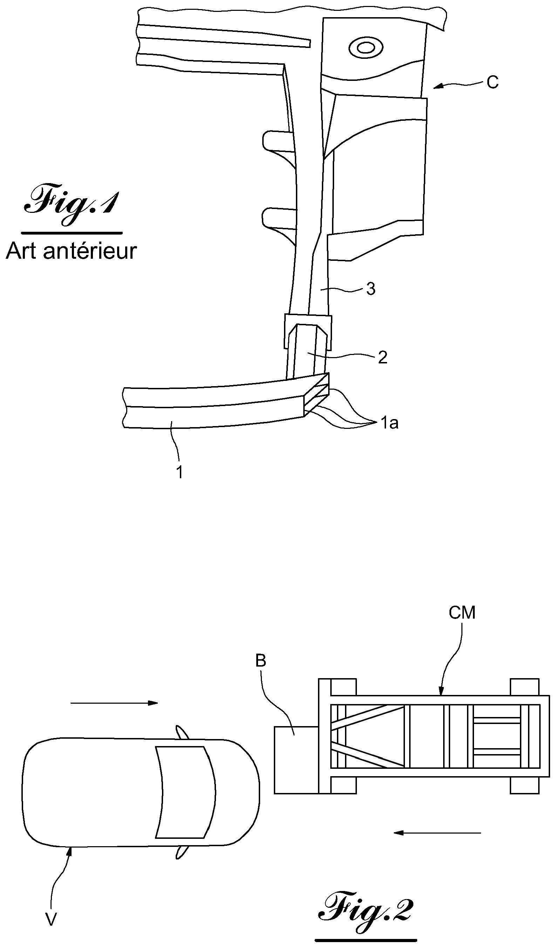

La figure 1 représente partiellement en perspective un côté de la caisse d'un véhicule selon l'art antérieur et comprenant la poutre avant transversale de pare-chocs 1 dont l'une des deux extrémités est reliée à l'extrémité avant de l'absorbeur de choc 2 dont l'extrémité arrière est reliée à l'avant du brancard correspondant 3 de la caisse C du véhicule.

Le document DE202017101 524U décrit un système de pare-chocs, selon le préambule de la revendication 1 comprenant: une poutre de pare-chocs en avant à un véhicule transversalement par rapport au véhicule, et comportant des extensions s'étendant transversalement par rapport à la poutre de pare-chocs.

La figure 2 illustre en vue de dessus le test de choc frontal du nouveau protocole susmentionné selon lequel le véhicule V est projeté à faible vitesse contre une barrière déformable B embarquée sur un chariot mobile CM représentatif d'un second véhicule dont la face avant est représentée par la barrière déformable B.

La réussite de ce test passe par le fait de ne pas "agresser" la barrière B, c'est-à-dire de ne pas la déchirer ou la percer lors du choc frontal du véhicule V avec la barrière déformable B décalée par rapport à l'axe de déplacement du véhicule V.

Comme le montre la figure 1, la poutre avant 1 comporte à chacune de ses deux extrémités s'arrêtant sensiblement au droit de l'absorbeur de choc correspondant 2 des arêtes vives 1a qui risquent de déchirer la barrière B lors du test de choc frontal de la figure 2.

Pour satisfaire au nouveau protocole de choc frontal, il est connu de réaliser une nouvelle poutre avant de pare-chocs de la partie avant d'un véhicule automobile avec des débordements suffisamment raides sur les côtés de la poutre avant et de renforcer cette dernière pour limiter sa protection au centre. Cependant, cette solution connue se traduit par une poutre avant plus lourde et de section plus importante pour que cette poutre soit suffisamment raide sur les côtés. En outre, cette solution connue ne règle pas complètement le problème de déchirure de la barrière B et, par conséquent, de la peau de pare-chocs du véhicule représenté par le charriot mobile CM et la barrière B car la raideur d'une poutre avant n'est pas toujours facile à régler sur les côtés.

Le document US 9 073 496 divulgue une structure de traverse avant de pare-chocs d'un véhicule automobile, à renforcements insérés dans la traverse avant et constitués de tubes d'acier transversaux s'étendant tout le long de cette traverse.

Cependant, une telle structure connue de traverse avant de pare-chocs d'un véhicule ne s'adresse pas du tout au problème de déchirement d'une barrière déformable lors du test de choc frontal avec un véhicule suivant le nouveau protocole de choc frontal précédemment mentionné.

La présente invention a pour but de remédier aux inconvénients ci-dessus de l'art antérieur.

Ce but est atteint, selon l'invention, grâce à une partie avant de la caisse d'un véhicule d'après la revendication 1, notamment automobile, comprenant une poutre avant transversale de pare-chocs dont les deux extrémités opposées sont reliées chacune à l'extrémité avant d'un absorbeur de choc dont l'extrémité arrière est reliée à l'avant de l'un des deux brancards de la caisse, laquelle partie avant est caractérisée en ce que chacune des extrémités de la poutre avant comprend un embout de renfort rigide solidaire de la poutre avant en prolongement de celle-ci et qui présente une courbure dirigée vers l'arrière du véhicule et en ce que l'embout de renfort est recouvert d'une enveloppe d'amortissement.

Avantageusement, l'embout de renfort est fixé dans une partie d'extrémité correspondante de la poutre avant par soudage ou collage.

En variante, l'embout de renfort est fixé dans la partie d'extrémité correspondante de la poutre avant par une mousse expansée dans cette partie d'extrémité.

Avantageusement, l'enveloppe d'amortissement est fixée par collage autour de l'embout de renfort et, le cas échéant, par collage au niveau de son raccord à l'extrémité de la poutre avant.

De préférence, l'embout de renfort comprend deux tubes métalliques parallèles et superposés de sections circulaires ou rectangulaires logés respectivement dans deux compartiments internes de la partie d'extrémité de la poutre avant.

Selon l'invention, l'enveloppe d'amortissement est un profilé en un matériau composite.

L'arrière de chaque absorbeur de choc porte une platine qui est elle-même fixée à une platine fixée à l'avant du brancard correspondant, un gousset est fixé entre les deux platines et une boîte en un matériau composite est fixée en équerre entre le gousset et l'extrémité de la poutre avant.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode modes de réalisation de l'invention et dans lesquels :
- La figure 1 est une vue en perspective partielle d'une partie avant d'un véhicule automobile selon l'art antérieur décrit précédemment ;
- la figure 2 représente un test de choc frontal d'un véhicule contre une barrière déformable suivant le nouveau protocole de choc frontal décrit précédemment ;
- la figure 3 est une vue partielle en perspective de la partie avant de la caisse d'un véhicule automobile et dont la poutre avant comporte un embout de renfort conforme à l'invention ;
- la figure 4 est une vue agrandie de la partie cerclée en IV de la figure 3 ;
- la figure 5 est une vue de dessus suivant la flèche V de la figure 3 ;
- la figure 6 est une vue partielle en perspective semblable à celle de la figure 3 et représentant une enveloppe d'amortissement recouvrant l'embout de renfort de l'invention ;
- la figure 7 est une vue partielle en perspective agrandie suivant la flèche VII de la figure 6 ;
- la figure 8 est une vue en perspective représentant l'ensemble à embout de renfort et enveloppe d'amortissement de l'invention ;
- la figure 9 est une vue partielle en perspective agrandie de la partie avant suivant une variante de réalisation montrant l'ajout d'une boîte composite d'équerre entre un gousset et l'extrémité de la poutre avant à embout de renfort ;
- la figure 10 est une vue partielle en perspective représentant la boîte de la figure 9 située entre le gousset et l'extrémité de la poutre avant pourvue de l'enveloppe d'amortissement recouvrant l'embout de renforcement ; et
- la figure 11 est une vue en perspective agrandie de la boîte représentée aux figures 9 et 10.

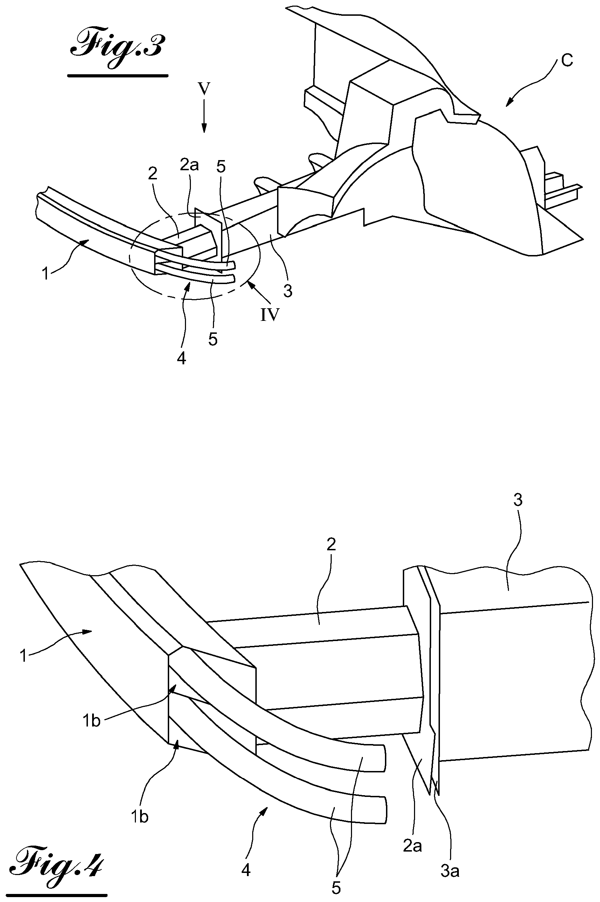

Les figures 3 à 6 représentent partiellement une partie avant de la caisse C d'un véhicule automobile et comprenant une poutre avant métallique de pare-chocs 1 s'étendant transversalement au véhicule et dont l'une des extrémités est reliée à l'extrémité avant d'un absorbeur de choc 2 dont l'extrémité arrière est reliée à l'avant de l'un des deux brancards 3 de la caisse C.

Bien que cela ne soit pas représenté, l'extrémité opposée de la poutre avant 1 est reliée à l'extrémité avant de l'autre absorbeur de choc dont l'extrémité arrière est reliée à l'avant de l'autre des deux brancards 3 de la caisse C.

Les deux absorbeurs de choc 2 sont situés dans le prolongement respectivement des deux brancards 3.

En outre, les deux absorbeurs de choc 2 et les deux brancards 3 de la caisse C sont disposés symétriquement au plan vertical médian du véhicule automobile.

Conformément à l'invention, la partie avant de la caisse C comprend en outre un embout de renfort rigide 4 solidaire de la chacune des extrémités de la poutre avant 1 en prolongement de cette dernière et qui présente une courbure dirigée vers l'arrière du véhicule de manière à recouvrir le côté de la poutre avant 1.

L'extrémité arrière de chaque absorbeur de choc 2 porte une platine 2a qui est fixée à une platine 3a elle-même fixée à l'extrémité avant du brancard correspondant 3, la fixation l'une à l'autre des deux platines 2a et 3a pouvant s'effectuer par l'intermédiaire de boulons, non représentés.

De préférence, l'embout de renfort 4 est constitué par deux tubes métalliques parallèles 5, par exemple en acier, et qui sont superposés en étant chacun recourbé vers l'arrière du véhicule en faisant saillie au-delà du plan vertical contenant l'absorbeur de choc 2 et le brancard correspondant 3.

Les deux tubes recourbés 5 sont logés par leurs parties d'extrémités respectivement dans deux compartiments longilignes internes 1b formés dans la partie creuse de la poutre avant 1 et sont fixés dans ces deux compartiments par tout moyen approprié.

Par exemple, les deux tubes de renfort 5 peuvent être fixés par soudage dans les compartiments 1b de la poutre avant 1 par laser ou cordons de soudure ou peuvent être fixés par collage avec une colle structurale ou un mastic notamment dans le cas où la poutre avant 1 présenterait une section transversale carrée. Un tel mode de fixation sera à prévoir dans le cas où la poutre avant 1 est constituée par une nouvelle pièce (reconçue) de sorte que les tubes de renfort 5 à chacune des extrémités de la poutre avant 1 seront assemblés pendant la réalisation de la poutre elle-même.

Dans le cas où on réutilise une poutre avant 1 déjà existante et donc reconduite dans le cadre de l'invention, les tubes de renfort 5 sont alors insérés dans les parties d'extrémité correspondantes de la poutre avant 1 en fin de montage du véhicule et ces tubes peuvent être maintenus dans les parties d'extrémités de la poutre avant 1 en injectant une dose appropriée de mousse expansive dans chaque compartiment 1b de la poutre, laquelle mousse, une fois expansée, solidarisera les tubes de renfort 5 dans les parties d'extrémités creuses correspondantes de la poutre avant 1.

Les figures 3 à 5 montrent que chacun des tubes de renfort 5 présentent en section transversale une forme circulaire, mais ils peuvent présenter une section transversale rectangulaire ou carrée qui leur permettra de s'ajuster eux-mêmes dans leurs compartiments respectifs internes de forme conjuguée 1b de la poutre avant 1 en étant bien entendu solidarisés aux parties d'extrémités de cette poutre par les moyens de fixation susmentionnés.

Il est préférable néanmoins de réaliser les deux tubes de renfort 5 de section circulaire qui ne présentent pas d'arrête vive pouvant être "agressive" vis-à-vis de la barrière B représentant un autre véhicule, comme représenté en figure 1.

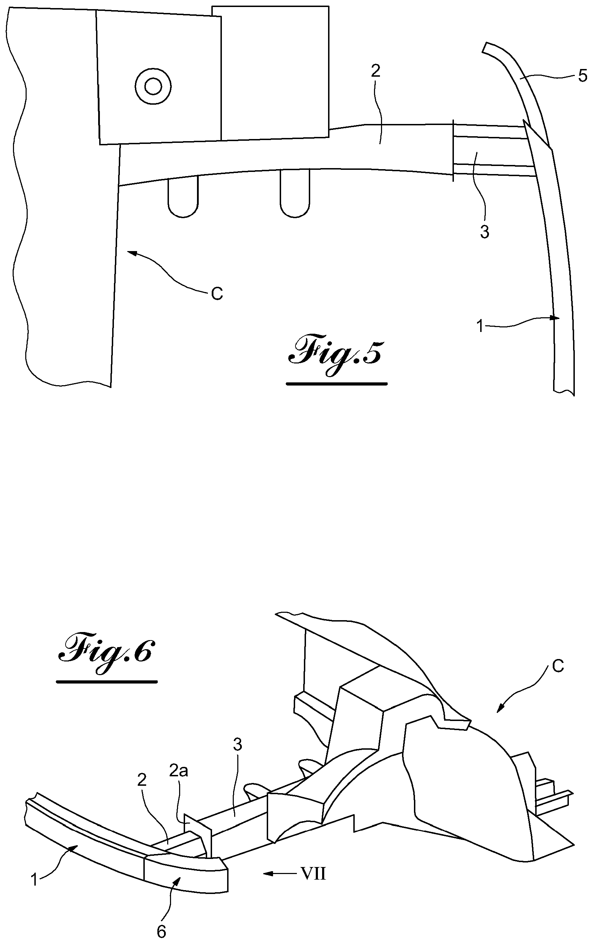

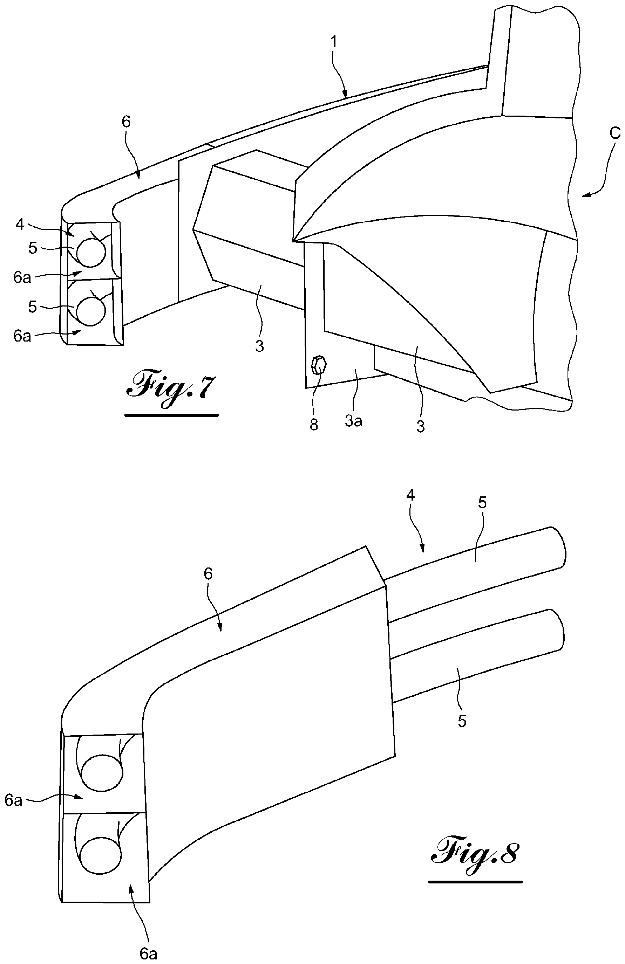

Dans le but d'un amortissement lors du contact de l'un ou l'autre côté de la poutre avant 1 avec la barrière B, l'invention prévoit la présence d'une enveloppe d'amortissement 6 constituée par un profilé en matériau composite, comme cela ressort des figures 6 à 8.

L'enveloppe d'amortissement 6 présente un corps creux comprenant deux compartiments internes parallèles 6a dans lesquels sont logés respectivement les deux tubes de renfort 5 de l'extrémité correspondante de la poutre avant 1. Ainsi, chaque enveloppe d'amortissement 6 épouse la forme cintrée des deux tubes de renfort correspondant 5 et elle peut être fixée autour des tubes de renfort 5 par exemple par injection d'une mousse expansible dans chaque compartiment 6a de l'enveloppe d'amortissement 6 pour solidariser les deux tubes dans leurs compartiments respectifs 6a une fois la mousse expansée.

De préférence, le matériau composite de l'enveloppe d'amortissement 6 est du type à fibres courtes, rendant ce matériau peu coûteux.

Le cas échéant, l'enveloppe d'amortissement 6 peut être fixée, par exemple par collage, au niveau de sa partie de raccordement à la poutre avant 1 comme cela ressort de la figure 6.

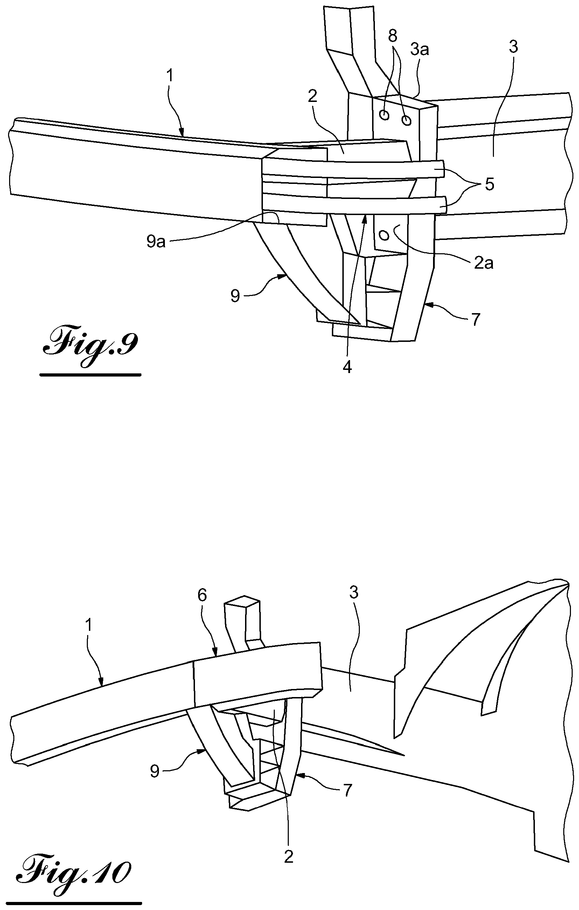

Les figures 9 à 11 représentent une variante de réalisation de l'invention s'appliquant dans le cadre d'un gousset 7 de brancard avant 3 et qui est fixé entre les deux platines 2a, 3a respectivement de chaque absorbeur de choc 2 et du brancard 3 par l'intermédiaire de boulons de fixation 8.

Un tel gousset 7 est présent surtout dans le cas d'un véhicule automobile qui ne comporte pas de voie basse, mais seulement une voie haute comprenant les deux brancards avant 3.

Selon cette variante de réalisation, en plus de la présence de l'embout de renfort 4 à tubes 5 et de l'enveloppe d'amortissement 6 à chaque extrémité de la poutre avant haute 1, on prévoit une boîte 9, de préférence en matériau composite à cloisons internes pour des raisons d'inertie et d'allègement et qui est montée en équerre entre le gousset métallique 7 et la poutre avant haute 1.

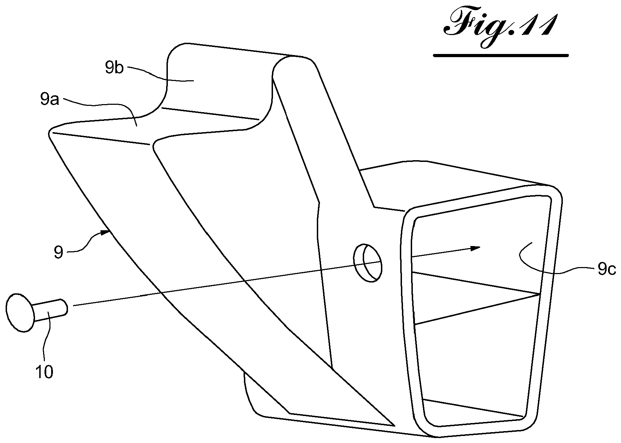

Comme cela ressort mieux de la figure 11, la boîte 9 comporte une partie supérieure formant coin 9a pouvant être fixée par collage sous le flan inférieur de la poutre avant haute 1 et qui est raccordée à un bord 9b sensiblement perpendiculaire au coin 9a et apte à venir en appui contre la poutre 1 en arrière de celle-ci lors du montage avant fixation du coin supérieur 9a sous le flan de la poutre 1.

La boîte 9 comporte en outre une paroi de fond 9c qui est fixée, par exemple par collage, sur la partie pendante inférieure du gousset 7 du brancard 3. En variante, la paroi de fond 9c peut être fixée au gousset 7 par des vis auto-taraudeuses 10, dont une seule est représentée en figure 11.

Ainsi, même dans le cas d'un véhicule automobile sans voie basse, ni poutre basse, l'ajout de la boîte 9 entre chaque gousset 7 et la poutre haute 1 permet d'augmenter la surface de contact avec la barrière déformable B ainsi que la stabilité de la poutre 1 qui se trouve renforcée.

L'invention ci-dessus décrite présente les avantages suivants :
- elle ne nécessite pas obligatoirement l'utilisation d'une nouvelle poutre de la partie avant de la caisse du véhicule et, par conséquent, n'implique pas d'investissement supplémentaire, diminuant les coûts de fabrication,
- l'ensemble à poutre haute, embouts de renfort à tubes cintrés et enveloppes d'amortissement présente une masse inférieure à une poutre renforcée de l'art antérieur, d'environ 0,5kg en moins,
- elle satisfait pleinement au nouveau protocole européen de choc frontal "choc frontal compatibilité" du fait que chaque embout de renfort ne présente aucun risque d'agressivité de forme susceptible de déchirer la barrière déformable B représentant un autre véhicule et que l'enveloppe d'amortissement non seulement amortit et adoucit le contact de chaque extrémité de la poutre avec la barrière déformable B, mais également efface toute arête vive des parties métalliques pour ne pas risquer de déchirer la barrière déformable,
- elle présente un gain en porte-à-faux avant d'environ 10mm, ce qui implique plus de liberté pour les styles de structures de faces avant de véhicules automobiles ;
- l'embout de renfort de chaque extrémité de la poutre avant haute est déclinable, c'est-à-dire il peut être monté ou non à chacune des extrémités de cette poutre suivant la zone géographique d'utilisation des véhicules automobiles imposant ou non des exigences devant respecter le nouveau protocole de choc frontal.

## Revendications

1. Partie avant de la caisse (C) d'un véhicule, notamment automobile, comprenant une poutre avant transversale de pare-chocs (1) dont les deux extrémités opposées sont reliées chacune à l'extrémité avant d'un absorbeur de choc (2) dont l'extrémité arrière est reliée à l'avant de l'un des deux brancards (3) de la caisse (C), chacune des extrémités de la poutre avant (1) comprenant un embout de renfort rigide (4) solidaire de la poutre avant (1) en prolongement de celle-ci et qui présente une courbure dirigée vers l'arrière du véhicule, **caractérisée en ce que** l'embout de renfort (4) est recouvert d'une enveloppe d'amortissement (6), l'enveloppe d'amortissement (6) étant un profilé en un matériau composite.

2. Partie avant de la caisse d'un véhicule selon la revendication 1, **caractérisée en ce que** l'embout de renfort (4) est fixé dans une partie d'extrémité correspondante de la poutre avant (1) par soudage ou collage.

3. Partie avant de la caisse d'un véhicule selon la revendication 1, **caractérisée en ce que** l'embout de renfort (4) est fixé dans la partie d'extrémité correspondante de la poutre avant (1) par une mousse expansée dans cette partie d'extrémité.

4. Partie avant de la caisse d'un véhicule selon l'une des revendications 1 à 3, **caractérisée en ce que** l'enveloppe d'amortissement (6) est fixée par collage autour de l'embout de renfort (4) et, le cas échéant, par collage au niveau de son raccord à l'extrémité de la poutre avant (1).

5. Partie avant de la caisse d'un véhicule selon l'une des revendications 1 à 4, **caractérisée en ce que** l'embout de renfort (4) comprend deux tubes métalliques parallèles et superposés (5) de sections circulaires ou rectangulaires logés respectivement dans deux compartiments internes (1b) de la partie d'extrémité de la poutre avant (1).

6. Partie avant de la caisse d'un véhicule selon l'une des revendications 1 à 5, **caractérisée en ce que** l'arrière de chaque absorbeur de choc (2) porte une platine (2a) qui est elle-même fixée à une platine (3a) fixée à l'avant du brancard correspondant (3), un gousset (7) est fixé entre les deux platines (2a,3a) et une boîte (9) en un matériau composite est fixée en équerre entre le gousset (7) et l'extrémité de la poutre avant (1).

## Patentansprüche

1. Vorderteil des Wagenkastens (C) eines Kraftfahrzeugs, insbesondere eines Kraftfahrzeugs, mit einem vorderen Querträger von Stoßfängern (1), dessen zwei einander gegenüberliegende Enden jeweils mit dem vorderen Ende eines Stoßdämpfers (2) verbunden sind, dessen hinteres Ende mit dem vorderen Ende eines der beiden Schenkel (3) des Wagenkastens (C) verbunden ist, wobei jedes der vorderen Schenkel (1) einen starren Verstärkungsansatz aufweist (4) fest mit dem Vorderträger (1) in dessen Verlängerung verbunden und mit einer nach hinten gerichteten Krümmung des Fahrzeugs versehen ist, **dadurch gekennzeichnet, dass** die Verstärkungseinlage (4) mit einem Dämpfungsmantel (6) bedeckt ist, wobei der Dämpfungsmantel (6) ein Profil aus Verbundwerkstoff ist.

2. Vorderteil des Fahrzeugaufbaus nach Anspruch 1, **dadurch gekennzeichnet, dass** der Verstärkungsansatz (4) in einem entsprechenden Endabschnitt des vorderen Trägers (1) durch Schweißen oder Kleben befestigt ist.

3. Vorderteil des Fahrzeugaufbaus nach Anspruch 1, **dadurch gekennzeichnet, dass** der Verstärkungsansatz (4) in dem entsprechenden Endabschnitt des vorderen Balkens (1) durch einen in diesem Endabschnitt geschäumten Schaum befestigt ist.

4. Fahrzeugkarosserieteil nach einem der Ansprüche 1 bis 3, **dadurch gekennzeichnet, dass** der Dämpfungsmantel (6) um den Verstärkungsstutzen (4) geklebt und gegebenenfalls an seinem Anschluss an das Ende des Vorderbalkens (1) geklebt ist.

5. Vorderteil des Fahrzeugaufbaus nach einem der Ansprüche 1 bis 4, **dadurch gekennzeichnet, dass** die Verstärkungsspitze (4) zwei parallele und übereinander angeordnete Metallrohre (5) mit kreisförmigen oder rechteckigen Abschnitten umfasst, die jeweils in zwei inneren Kammern (1b) des Endabschnitts des vorderen Balkens (1) aufgenommen sind.

6. Vorderteil des Fahrzeugaufbaus nach einem der Ansprüche 1 bis 5, **dadurch gekennzeichnet, dass** die Rückseite jedes Stoßdämpfers (2) eine Platine (2a) trägt, die ihrerseits an einer Platine (3a) befestigt ist, die an der Vorderseite des entsprechenden Trägers (3) befestigt ist, wobei zwischen den beiden Platinen (2a, 3a) und einer Dose (9) aus Material ein Stift befestigt ist Der Verbundwerkstoff ist zwischen dem Stift (7) und dem Ende des vorderen Balkens (1) in einem Winkel befestigt.

## Claims

1. Front part of the body (C) of a vehicle, including a motor vehicle, including a cross-section front beam of bumper (1) with two opposite ends connected to the front end of a shock absorber (2) with a rear end connected to the front of one of the two stretchers (3) of the body (C), each end of the front beam (1) with a nose end strong rigid (4) attached to the front beam (1) in extension of the beam and having a curvature directed towards the rear of the vehicle, **characterized by** the reinforcement tip (4) being covered with a damping envelope (6), the damping envelope (6) being a profile made of a composite material.

2. Front part of the body of a vehicle in accordance with Claim 1, characterized as the reinforcement tip (4) is fixed in a corresponding end part of the front beam (1) by welding or gluing.

3. Front part of the body of a vehicle in accordance with Claim 1, characterized as the reinforcement tip (4) is fixed in the corresponding end part of the front beam (1) by a foam expansed in that end part.

4. Front part of the body of a vehicle in accordance with one of the claims 1 to 3, **characterized by** that the damping envelope (6) is fixed by gluing around the reinforcement end (4) and, if applicable, by gluing at the end of the front beam (1).

5. Front part of the body of a vehicle in accordance with one of claims 1 to 4, **characterized by** the reinforcement tip (4) consisting of two parallel metal tubes and overlapped (5) of circular or rectangular sections housed in two internal compartments (1b) of the end part of the front beam (1), respectively.

6. Front part of the body of a vehicle in accordance with one of the claims 1 to 5, **characterized by** that the back of each shock absorber (2) carries a plate (2a) which is itself fixed to a plate (3a) fixed to the front of the corresponding stretcher (3), a pin (7) is fixed between the two decks (2a,3a) and a box (9) in a composite material is secured in square form between the base (7) and the end of the front beam (1).
